# EUROPÄISCHE PATENTSCHRIFT

(11) **EP 2 597 439 B1**
(45) Veröffentlichungstag und Bekanntmachung des Hinweises auf die Patenterteilung: **06.12.2023**
(21) Anmeldenummer: 12190818.0
(22) Anmeldetag: 31.10.2012
(51) Int. Cl.: G01J 5/0818, G01J 5/0803, G01J 5/0875, G01J 5/04

(54) **Druckbehälter**
Pressure vessel
Récipient sous pression

(30) Priorität: 02.09.2011 DE 202011105285 U
(43) Veröffentlichungstag der Anmeldung: 29.05.2013
(73) Patentinhaber: Mikrowellen-Systeme MWS GmbH, 9435 Heerbrugg (CH)
(72) Erfinder:
(74) Vertreter: Kiwit, Benedikt

(56) Entgegenhaltungen:
- EP-A1- 0 501 285
- EP-A2- 1 164 366
- WO-A1-2005/080938
- DE-A1- 2 829 154
- DE-A1- 4 412 887
- DE-U1- 20 207 013

## Beschreibung

Die vorliegende Erfindung betrifft Druckbehälter zur Aufnahme von zu beheizenden Proben sowie Verfahren zur Temperaturmessung von in einem Druckbehälter aufgenommenen, zu beheizenden Proben.

Eine Vorrichtung sowie ein Verfahren zur Temperaturmessung von zu beheizenden Proben, insbesondere von mittels Mikrowellen beheizten Proben, ist aus der DE 44 12 887 A1 bekannt. Die darin gezeigte Vorrichtung weist einen geschlossenen, infrarotdurchlässigen Druckbehälter auf. Unmittelbar vor dem Druckbehälter in ihrem oberen Bereich, also oberhalb der Oberfläche des Druckbehälters, ist ein Quarzlichtleiter positioniert, dessen anderes Ende sich direkt vor einem selektiven, schmalbandigen Infrarotdetektor befindet.

Die DE 42 00 462 A1 zeigt eine Vorrichtung zum Messen einer Heiztemperatur in einem hohen elektrischen Feld von Mikrowellen. Zur Übertragung von Infrarotstrahlung aus einem Mikrowellenraum ist ein Glasfaserkabel vorgehsehen. Die EP 0 501 285 A1 offenbart eine Vorrichtung zum Auslösen und/oder Fördern chemischer und/oder physikalischer Druckreaktionen, wobei eine Gehäuseanordnung einen oder mehrere Druckbehälter aus hochdruckfestem Werkstoff umfasst.

Es ist somit eine Aufgabe der Erfindung, einen Druckbehälter und ein Verfahren zur Temperaturmessung der eingangs genannten Art zur Verfügung zu stellen, mit denen eine sichere, einfache, kompakte sowie in einem breiten Bereich temperaturund druckbeständige sowie genaue Temperaturmessung zur Verfügung gestellt wird.

Gemäß Anspruch 1 ist ein Druckbehälter zur Aufnahme von zu beheizenden Proben bereitgestellt.

Die Proben werden vorzugsweise mittels Mikrowellen oder thermischem Tauchsieder erhitzt.

Der Druckbehälter kann einen Mikrowellen-durchlässigen Bereich aufweisen, über den Mikrowellen in die Reaktionskammer eingekoppelt werden können. Das hohle Lichtleitrohr erstreckt sich von dem Mikrowellen-durchlässigen Bereich zu dem außerhalb des Druckraumes angeordneten Infrarotsensor. In dem Mikrowellen-durchlässigen Bereich ist zwischen Reaktionskammer und Lichtleitrohr und vorzugsweise an der Reaktionskammer anliegend ein infrarotdurchlässiges Druckaufnahmeteil vorgesehen, um das Lichtleitrohr im Mikrowellen-durchlässigen Bereich abzustützen.

Auf diese Weise ist es möglich, in eine großen Druckbereich (bspw. von 5 bar bis 400 bar) Temperaturkontrollen mittels eines Infrarotsensors durchzuführen, wobei die von den erhitzten Proben emittierte Infrarotstrahlung sicher, schnell, einfach und kompakt über ein hohles Lichtleitrohr zu einem Infrarotsensor geleitet wird. Das Lichtleitrohr ist dabei sicher mittels eines infrarotdurchlässigen Druckaufnahmeteils gegenüber den umgebenden Druckbehälterbereichen abgestützt, insbesondere auch gegenüber dem Druckraum bzw. der Reaktionskammer. Der Infrarotsensor kann somit mit einer relativ kleinen Abbildung auf das Druckaufnahmeteil schauen (da das Lichtleitrohr sicher abgestützt ist), und hat für den Infrarotbereich gleichzeitig eine sehr gute Lichtausbeute aufgrund der Verwendung des hohlen Lichtleitrohres, was eine hervorragende berührungslose Messung ermöglicht.

Vorzugsweise ist das Lichtleitrohr mit Gas, besonders vorzugsweise mit Infrarot-durchlässigen Lichtleitfasern zum Leiten der Infrarotstrahlung ausgefüllt, wobei die Lichtleitfasern vorzugsweise in Richtung einer Längserstreckung des Lichtleitrohres orientiert sind. Es ist somit, insbesondere durch den Einsatz von Lichtleitfasern, möglich, die Infrarot-Strahlungstransmission durch interne Reflektion zu verbessern.

Vorzugsweise ist das Lichtleitrohr außerhalb des Druckraumes, vorzugsweise außerhalb des Mikrowelle-durchlässigen Bereichs bzw. (dem Teil) der Druckbehälterwandung, mit einem Thermofühler ausgestattet. Auf diese Weise kann eine einfache Kontrolle der Erwärmung im HF-(MW)-Bereich (Hochfrequenz-Mikrowellen-Bereich) bereitgestellt werden.

Vorzugsweise hat der Infrarotsensor einen Messbereich von 1-8 µm, also eine hohe Durchlässigkeit für Infrarotstrahlung in dem vorgenannten Bereich.

Das Druckaufnahmeteil ist aus Aluminiumoxid, Saphir, Kalziumfluorid oder Quarz hergestellt; dies trifft auch auf das Druckaufnahmeteil in den weiter unten beschriebenen Verfahren zu. Auf diese Weise wird ein temperaturbeständiges, hartes (kratzfestes) und gegenüber Chemikalien beständiges Druckaufnahmeteil mit guten Lichtleiteigenschaften zur Verfügung gestellt.

Vorzugsweise weist das Druckaufnahmeteil in einem vorgegebenen Wellenlängenbereich, beispielsweise von 2500 Wellenzahlen pro cm bis 3500 Wellenzahlen pro cm, ein Transmissionsfenster für Infrarotstrahlung auf, wobei Infrarotstrahlung außerhalb dieses Transmissionsfensters stark absorbiert wird. Auf diese Weise dient das Druckaufnahmeteil als Filter für einen vorbestimmten Wellenlängenbereich, der beispielsweise dem aufnehmbaren Bereich des Infrarotsensors entspricht.

Vorzugsweise weist der Druckbehälter einen Unterteil und einen Deckelteil auf, die miteinander verschließbar sind und im geschlossenen Zustand allseitig die Reaktionskammer umgeben. Auf diese Weise wird ein leicht zugänglicher und einfach zu handhabender Druckbehälter bereitgestellt.

Vorzugsweise weist das Deckelteil eine mechanische Aufnahme oder magnetische Halterung zur Aufnahme eines Probenaufnahme teils und/oder eines Behältereinsatz und/oder eines Rührers auf. Die Befestigung der vorgenannten Teile kann somit vereinfacht und daher die Durchführung des Analyseverfahrens insgesamt verkürzt werden.

Vorzugsweise weist der Druckbehälter ferner einen Motor auf, mittels dem das Probenaufnahmeteil und/oder der Behältereinsatz und/oder der Rührer und/oder die Magnete der magnetischen Halterung und/oder unterhalb der Probenaufnahme oder des Behältereinsatz angeordnete Magnete drehbar antreibbar sind. Auf diese Weise kann eine gleichmäßige Erwärmung und somit eine genauere Probenreaktion erzielt werden. Zudem wird die Reaktionsdauer bei verbessertem Ergebnis verkürzt.

Vorzugsweise weist der Druckbehälter eine die Reaktionskammer umschließende Isolationsauskleidung auf, die besonders vorzugsweise aus Kunststoff, PTFE oder Keramik besteht. Die Isolationsauskleidung dient als Isolator des Druckbehälters gegenüber einer beheizten Probe. Neben der Verringerung der thermischen Belastung dient die Isolationsauskleidung ferner als Korrosionsschutz der Druckbehälterinnenwand sowie als Schutz der Druckbehälterinnenwand gegenüber einer chemischen Belastung durch die Probe.

Vorzugsweise weist der Druckbehälter eine die Reaktionskammer (wenigstens teilweise) umgebende Kühlanordnung derart auf, dass der Druckbehälter gleichzeitig beheizbar und kühlbar ist, wobei die Kühlanordnung vorzugsweise eine Durchflusskühlung ist und wenigstens einen Einlass und einen Auslass für ein Kühlmedium aufweist. Auf diese Weise kann eine thermische Beeinflussung des Druckbehälters verringert oder gar vermieden werden.

Gemäß Anspruch 11 ist ein Verfahren zur Temperaturmessung von in einem Druckbehälter aufgenommenen, zu beheizenden Proben bereitgestellt.

Gemäß Anspruch ist 12 ein alternatives Verfahren zur Temperaturmessung von in einem Druckbehälter aufgenommenen, zu beheizenden Proben bereitgestellt.

Vorzugsweise wird der Druckbehälter, der eine die Reaktionskammer umschließende Isolationsauskleidung aufweist, durch die mittels Mikrowellenheizung oder thermischem Tauchsieder erhitzten Proben erhitzt und gleichzeitig durch eine die Reaktionskammer umgebende Kühlanordnung gekühlt.

Vorzugsweise ist das Lichtleitrohr mit Gas, besonders vorzugsweise mit Infrarot-durchlässigen Lichtleitfasern ausgefüllt, über das bzw. die die Infrarotstrahlung geleitet wird. Auf diese Weise kann die Infrarot-Strahlungstransmission durch interne Reflektion weiter verbessert werden.

Weitere Ausgestaltungen und Vorteile der Erfindung werden im Folgenden anhand von Ausführungsbeispielen im Zusammenhang mit den Figuren der begleitenden Zeichnungen beschrieben.
- Fig. 1: zeigt eine erste Ausführungsform eines erfindungsgemäßen Druckbehälters,
- Fig. 2: zeigt eine zweite Ausführungsform eines erfindungsgemäßen Druckbehälters.

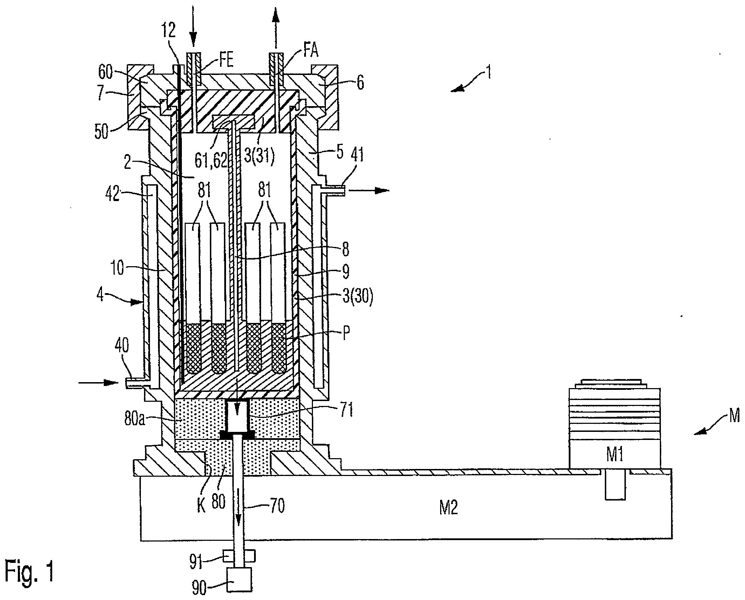

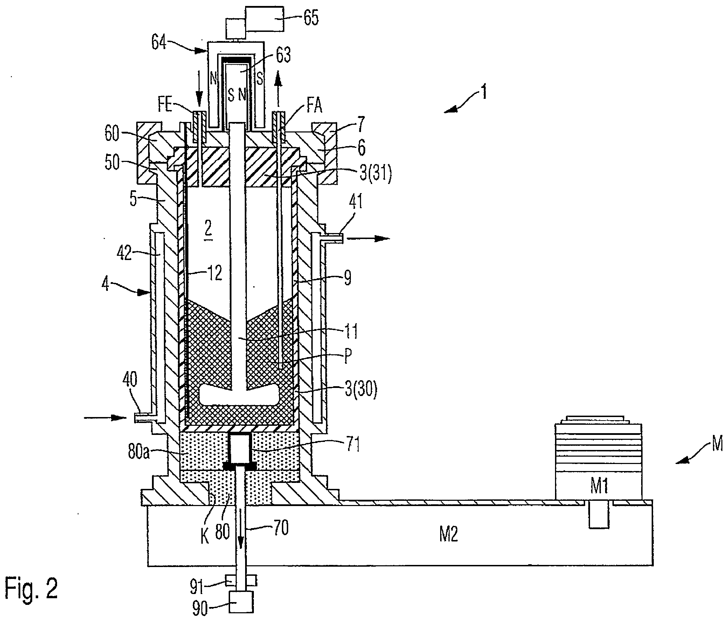

Figuren 1 und 2 zeigen eine erste und zweite Ausführungsform eines erfindungsgemäßen Druckbehälters 1 (im Folgenden auch als "Behälter" oder "Probenbehälter" bezeichnet) zur Aufnahme von zu beheizenden Proben P zum Auslösen und/oder Fördern chemischer und/oder physikalischer Druckreaktionen an den Proben P. Der Druckbehälter 1 besteht vorzugsweise aus einem hochdruckfesten Werkstoff wie beispielsweise Metall, vorzugsweise Stahl, besonders vorzugsweise einer Sondermetalllegierung. Der Druckbehälter 1 ist dabei vorzugsweise derart ausgebildet, dass er bei Drücken bis zu wenigstes 200bar, vorzugsweise bis zu wenigstens 500bar, sowie bei Temperaturen von über 300°C einsetzbar ist.

Der Druckbehälter 1 umgibt eine Reaktionskammer bzw. einen Druckraum 2 zum Auslösen und/oder Fördern der chemischen und/oder physikalischen Druckreaktionen an den Proben P. Die Probe P ist zur Probenbehandlung in der Reaktionskammer 2 angeordnet und aus dieser vorzugsweise durch eine Öffnung entnehmbar. Die Reaktionskammer 2 ist folglich vorzugsweise wahlweise verschließbar.

Der Druckbehälter 1 weist ferner vorzugsweise eine die Reaktionskammer 2 umschließende Isolationsauskleidung 3 (einen sogenannten Liner) auf. Diese Isolationsauskleidung 3 besteht vorzugsweise aus Kunststoff, PTFE, Keramik oder Tantal. Die Isolationsauskleidung 3 dient somit einerseits als Isolator des Druckbehälters 1 gegenüber der beheizten Probe P und dient andererseits, neben der Verringerung der thermischen Belastung, als Korrosionsschutz der Druckbehälterinnenwand sowie als Schutz der Druckbehälterinnenwand gegenüber einer chemischen Belastung durch die Probe P. Die Isolationsauskleidung 3 weist beispielsweise eine Wandstärke von 3 bis 10 mm auf, vorzugsweise 4 bis 6 mm.

Ferner weist der Druckbehälter 1 vorzugsweise eine Kühlanordnung 4 auf, die derart angeordnet ist, dass sie die Reaktionskammer 2 wenigstens teilweise, vorzugsweise ganz umgibt und der Kühlkanal somit einen Kühlmantel 42 bildet. Vorzugsweise umgibt die Kühlanordnung 4 wenigstens den Bereich der Probenaufnahme des Druckbehälters 1. Der Bereich der Probenaufnahme ist dabei der Bereich in der Reaktionskammer 2, in dem sich zur Probenreaktion die Probe P befindet; insbesondere handelt es sich dabei, wie auch bei den gezeigten Ausführungsformen, um den unteren Bereich der Reaktionskammer 2. Vorzugsweise umgibt die Kühlanordnung 4 die Seitenwände 10 des Druckbehälters 1 über seine gesamte Länge, besonders vorzugsweise umgibt die Kühlanordnung 4 den gesamten Druckbehälter 1, insbesondere die Bereiche, an denen die Isolationsauskleidung 3 angeordnet ist. Auf diese Weise wird der Druckbehälter 1, der bei der Probenreaktion von innen mittels der beheizten Probe P erwärmt wird, gleichzeitig gekühlt, sodass die thermische Belastung des Druckbehälters 1 entsprechend reguliert und beispielsweise unterhalb einer vorbestimmten Temperatur gehalten werden kann. Beispielsweise kann bei Verwendung einer nur 5mm starken bzw. dünnen Isolationsauskleidung 3 auf einfache Weise ein Temperaturgradient der Isolationsauskleidung 3 von 300°C zu Raumtemperatur erzielt werden. Auf diese Weise kann durch die Kühlanordnung 4 der Druckbehälter 1 derart gekühlt werden, dass die Temperatur am Übergang zwischen Druckbehälterinnenwand und Isolationsauskleidung 3 auf Raumtemperatur bzw. einer beliebig vom Anwender vorbestimmten Temperatur gehalten wird. Ist die Temperatur des Druckbehälters 1 derart gering im Vergleich zu dem Probenraum bzw. der Reaktionskammer 2, also bspw. unter 100°C, vorzugsweise Raumtemperatur oder darunter, so wird auch ein Korrodieren des Druckbehälters 1, bspw. aufgrund von aus der Reaktionskammer 2 durch die Isolationsauskleidung 3 hindurchdiffundierende Säuremoleküle oder dergleichen, vermieden. Dadurch wird die Lebensdauer des Druckbehälters 1 deutlich verlängert gegenüber einem Druckbehälter, der nur ungleichmäßig oder gar nicht gekühlt wird. Auf diese Weise können auch absolut identische Bedingungen innerhalb der Reaktionskammer 2 erzielt werden, was wiederum zu einer schnelleren und genaueren Probenbehandlung führt. Durch die identischen Bedingungen in der Reaktionskammer 2 können alle Analyseverfahren beispielsweise durch den Einsatz interner Referenzstandards permanent einer analytischen Qualitätsüberwachung, z.B. dann auch mit einem Zertifikat, unterzogen werden.

Die erhitzte Probe P sowie die hohe Wellendichte durch die Mikrowellen, bspw. bei 1500W, erwärmt besagten Druckbehälter 1 aufgrund der Isolationsauskleidung 3 nur verzögert und/oder in abgeschwächter Form, im Vergleich zu einer Anordnung ohne Isolationsauskleidung, sodass die Druckbehälter 1 nur vergleichsweise geringen thermischen Einflüssen bzw. Unterschieden ausgesetzt sind.

Dies wird weiter dadurch positiv beeinflusst, dass der Druckbehälter 1 wenigstens in dem Bereich der Probenaufnahmen des Druckbehälters 1, vorzugsweise über den gesamten Bereich der Seitenwände des Druckbehälters 1, die ihn umgebende Kühlanordnung 4 aufweist, die den Druckbehälter 1 insbesondere in dem Bereich der größten Erwärmung gleichzeitig kühlt, und damit den thermischen Einflüssen der Probe P und der Heizung auf den Druckbehälter 1 entgegenwirkt. Auf diese Weise kann eine thermische Beeinflussung des Druckbehälters 1 verringert oder gar vermieden werden. Insbesondere wird der Druckbehälter 1 derart gekühlt, dass er einen vorbestimmten Temperaturschwellenwert nicht übersteigt. Dazu kann die Kühlung bei Erreichen einer bestimmten Temperatur des Druckbehälters 1 beginnen bzw. wieder abgestellt werden, oder die Druckbehälterwand wird vorzugsweise schon von Beginn des Heizvorgangs an und/oder permanent gekühlt. Bei permanenter Kühlung von Beginn des Heizvorganges an kann ein Überschreiten der Temperatur der Druckbehälterwand, bspw. von Raumtemperatur, frühzeitig vermieden werden. Es ist auch denkbar, dass die Kühlung erst später einsetzt oder vor Beendigung der Probenreaktion bereits abgestellt wird. Vorzugsweise wird jedoch die Kühlung bereits vor oder wenigstens von Beginn des Heizvorganges an begonnen und auch nach Beendigung des Heizvorganges fortgesetzt. Durch die rechtzeitige Einsetzung der Kühlung von Beginn an und permanent während des Versuchsablaufs wird ein Verschleiß des Druckbehälters 1 erheblich reduziert. Durch das weitere Kühlen nach Beendigung des Heizvorganges ist der Temperaturunterschied bzw. Temperaturgradient zwischen der Reaktionskammer 2 und dem Druckbehälter 1 (schlagartig) verringert, so dass eine besonders schnelle Abkühlung der Probe P trotz der Isolationsauskleidung 3 ermöglicht ist, während die Druckbehälterwand weiterhin auf einem konstant niedrigem Niveau gehalten wird. Somit wird auch während und nach dem Heizvorgang eine Korrosion des Druckbehälters 1 aufgrund stetig niedriger Temperaturen vermieden und dessen Lebensdauer erheblich verlängert.

Durch die direkte Beheizung der Probe P können somit extrem schnelle Heizraten erzielt werden. Durch die gleichzeitige Kühlung, vorzugsweise permanent und von Beginn an, wird zum einen die thermische Belastung des Druckbehälters 1 verringert, zum anderen kann gleichzeitig eine schnelle Abkühlung der Probe P nach durchgeführter Probenreaktion erzielt werden.

Die Kühlanordnung 4 weist vorzugsweise wenigstens einen Fluid-Einlass 40 und einen Fluid-Auslass 41 für ein Kühlmedium auf, sodass sie als Durchflusskühlung bzw. Umlaufkühler oder Kreislaufkühler ausgebildet ist. Als Kühlmittel wird ein Fluid, vorzugsweise Luft oder ein flüssiges Kühlmittel, eingesetzt. Wenn die Temperatur des Druckbehälters 1 auf unter 100°C, vorzugsweise auf Zimmertemperatur gehalten werden soll, kann bspw. Wasser als Kühlmedium verwendet werden, welches insbesondere leicht verfügbar und preiswert ist. Zudem kann auch jedes andere, bekannte Kühlmedium verwendet werden, welches einen höheren (oder niedrigeren) Siedepunkt und/oder einen höheren (oder niedrigeren) Wärmegradienten als Wasser besitzt. Das Kühlmedium wird beispielsweise außerhalb des Druckbehälters 1 mittels einer Pumpenanordnung (nicht gezeigt) durch den Umlaufkühler 4 geleitet und wird mittels eines Kühlelements (nicht gezeigt), wie beispielsweise einem Wärmetauscher, gekühlt. Die Kühlanordnung 4 kann bspw. auch als (Durchlauf)Kryostat ausgebildet sein, wobei das Kühlmedium mit sehr niedrigen Temperaturen in das System eingeführt wird, um aufgrund der hohen Temperaturdifferenz ein Kühlung des Druckbehälters 1, bspw. auf Raumtemperatur, gegenüber der Reaktionskammer 2, bspw. auf 300°C erhitzt, zu erzielen. Bspw. bei Einsatz einer Mikrowellen-Heizung kann, trotz der hohen Wellendichte in der Reaktionskammer 2, gegenüber klassischen Autoklaven eine entsprechende Kühlung und Schonung des Druckbehälters 1 erreicht werden. Insbesondere wird der Druckbehälter 1 derart geschont, dass bspw. ein Korrodieren aufgrund hindurchdiffundierender Stoffe aus der Reaktionskammer 2 vermieden wird.

Der Druckbehälter 1 besteht vorzugsweise aus einem (topfförmigen) Unterteil 5 und einem Deckelteil 6 (im Folgenden auch als "Deckel" bezeichnet), die miteinander verschließbar sind und im geschlossenen Zustand die Reaktionskammer 2 allseitig umgeben. Dabei verschließt der Deckel 6 die in dem Druckbehälter 1, also dem Unterteil 5 des Druckbehälters 1 vorgesehene Öffnung zum Einbringen und Entnehmen der Probe P. Die Erfindung ist jedoch nicht auf die vorgenannte Form beschränkt. Wenigstens der Unterteil 5 weist dabei die Isolationsauskleidung 3, 30 auf, vorzugsweise weist auch der Deckel 6 die Isolationsauskleidung 3, 31 auf.

Wie den Figuren 1 und 2 zu entnehmen ist, weisen sowohl das Unterteil 5 also auch der Deckel 6 vorzugsweise entsprechende Flanschbereiche 50, 60 auf. Mittels Haltemitteln 7, wie beispielsweis Klammern, die um die Flanschbereiche 50, 60 angeordnet sind, werden das Unterteil 5 und der Deckel 6 derart gegeneinander gedrückt, so dass der Druckbehälter 1 die sicher verschlossene, druckfeste Reaktionskammer 2 umgibt, also bildet. Beispiele für solche Haltemittel 7 sind in der DE 10 2010 030 287 näher beschrieben.

In einer besonders bevorzugten Ausführungsform ist der Deckel 6 zu dem Unterteil 5 hin vorgespannt, vorzugsweise federvorgespannt, also unter Zuhilfenahme einer Federkraft verschlossen, um die geschlossene Reaktionskammer 2 zu bilden. Die (Feder)Vorspannung ist dabei derart ausgebildet, dass sich der Deckel 6 und das Unterteil 5 bei Erreichen eines vorbestimmten Innendrucks innerhalb der Reaktionskammer 2 entgegen der Federvorspannung relativ voneinander weg bewegen. Auf diese Weise kann durch das sogenannte Abblasen, d.h., wenn sich aufgrund eines hohen Innerdrucks der vorgespannte Deckel 6 (leicht) abhebt, der vorbestimmte Innendruck nicht überstiegen werden. Somit wird ein überhöhter Innendruck, der zu einer Beschädigung des Druckbehälters 1 führen könnte, vermieden. Des Weiteren können auf diese Weise durch vorbestimmte Druckverhältnisse in der Reaktionskammer 2 vorbestimmte Reaktionsbedingungen bereitgestellt werden.

In einer besonders bevorzugten Ausführungsform ist zwischen dem Deckel 6 und dem Unterteil 5, vorzugsweise zwischen dem Deckel 6 und der Isolationsauskleidung 3, 30 des Unterteils 5, eine Dichtung (nicht gezeigt) vorgesehen, die im geschlossenen, also (feder-)vorgespannten Zustand des Druckbehälters 1 die Reaktionskammer 2 nach außen sicher abdichtet. Mittels der Dichtung werden eventuelle Unebenheiten insbesondere in den Flanschbereichen 50, 60 ausgeglichen und ein sicher verschlossener Reaktionsbereich in der Reaktionskammer 2 erzielt. Die Dichtung ist dabei vorzugsweise als O-Ring ausgebildet. Ferner vorzugsweise ist die Dichtung in einer entsprechend vorgesehenen Nut im Deckel 6 oder Druckbehälter 1, also dem Unterteil 5, oder der Isolationsauskleidung 3 sicher angeordnet und gehalten. Ferner vorzugsweise kann die Dichtung des Weiteren durch die sie umgebende Wand des Deckels 6 oder des Unterteils 5 gehalten werden. Die Dichtung ist vorzugsweise aus PFTE hergestellt.

In einer bevorzugten Ausführungsform bildet die Isolationsauskleidung 3 einen in den Druckbehälter 1 einsetzbaren Behältereinsatz 9 (im Folgenden auch als "PTFE-Einsatz" bezeichnet). Der Behältereinsatz 9 kann an dem Deckel 6 angeordnet sein, vorzugsweise ist er auf abnehmbare Weise mit dem Deckel 6 verbunden. Somit ist die Handhabung der Proben P deutlich vereinfacht. Vorzugsweise hat der Behältereinsatz 9 bzw. die Reaktionskammer 2 ein Fassungsvermögen von 0.5 bis 1 Liter; die Erfindung ist jedoch nicht hierauf beschränkt.

Besonders vorzugsweise sind die Proben P zusammen mit dem Deckel 6 relativ zum Unterteil 5 bewegbar. Auf diese Weise können nach der Reaktion die Proben P zusammen mit dem Deckel 6 aus dem Druckbehälter 1, genauer dem Unterteil 5, herausgenommen bzw. zur Probenreaktion in den Druckbehälter 1 hineingesetzt werden. Diese geschieht vorzugsweise durch automatischen Hinein- und Herausfahren. Auf diese Weise wird ein einfaches Einführen sowie eine einfache Entnahme der Proben P aus dem Druckbehälter 1 ermöglicht, wodurch das lästige und aufwändige Verschließen einzelner Druckbehälter 1 entfällt, was zu einer Einsparung der Probenbehandlung führt. Es ist bspw. denkbar, dass die Proben P in dem Behältereinsatz 9 direkt eingebracht sind. Die Probe P kann dann, wenn der Behältereinsatz 9 lösbar mit dem Deckel 6 verbunden ist, einfach aus dem Druckbehälter 1 mit dem Deckel 6 heraus- und in diesen wieder hineingefahren werden. Beispielsweise können jedoch auch mehrere Proben P in einem Probenaufnahmeteil 8 (bspw. ein Probenkassettenhalter gemäß Figur 1) angeordnet werden. Dieses Probenaufnahmeteil 8 kann, zur vereinfachten Handhabung der einzelnen Proben P an dem Deckel 6 angebracht, vorzugsweise lösbar mit diesem verbunden werden, wie im Weiteren noch näher erläutert. Auf diese Weise wird die Behandlungsdauer einer Probe P verringert und das aufwendige Verschließen jedes einzelnen Druckbehälters 1 bzw. jeder einzelnen Probe P vermieden. Beispielsweise kann auch das Probenaufnahmeteil 8 und der Behältereinsatz 9 mit dem Deckel verbunden, vorzugsweise lösbar verbunden sein.

Um das Probenaufnahmeteil 8 und den Behältereinsatz 9 mit dem Deckel 6 lösbar zu verbinden, kann das Deckelteil 6 eine mechanische Aufnahme 61 (vgl. Figur 1) oder magnetische Halterung 62, 63 (vgl. Figuren 1 und 2) aufweisen. Eine mechanische Halterung 61 kann beispielsweise mittels einer schwalbenschwanzförmigen Halterung oder einer Bajonettverbindung bereitgestellt werden, wobei ein entsprechender Teil der Verbindung auf der Unterseite des Deckels 6 vorgesehen ist, mit dem ein korrespondierender Teil der Verbindung der lösbar zu verbindenden Teile einfach verbunden werden kann. Wie Figur 1 zeigt, kann in die im Deckel 6 vorgesehene mechanische Aufnahme 61 beispielsweise ein Probenkassettenhalter 8 eingesetzt und somit gehaltert werden. Alternativ kann zu dieser mechanischen Aufnahme 61 auch eine magnetische Halterung 62, 63 vorgesehen sein. D.h., in dem Behälteroberteil 6 können Magnete (in Figur 1 nicht explizit gezeigt; 64 in Figur 2) vorgesehen sein, die beispielsweise den dargestellten Probenkassettenhalter 8 oder einen in Figur 2 gezeigten Rührer 11 haltern. Die Erfindung ist jedoch nicht auf die vorbeschriebenen Verbindungstypen beschränkt. Auch andere Verbindungsarten, wie bspw. Schraubverbindungen oder Steckverbindungen oder Schnappverbindungen und dergleichen sind von der Erfindung mit umfasst.

Wenn die in dem Oberteil 6 vorgesehenen Magnete 64 durch einen Motor 65 drehbar angetrieben werden können, kann beispielsweise dann auch magnetisch der in Figur 2 gezeigte Rührer 11 angetrieben werden, was insbesondere bei der Verwendung einer mikrowellenbasierten Probenanalyse von Vorteil ist.

Der Druckbehälter 1 kann folglich einen Motor 65 aufweisen, mittels dem beispielsweise die Magnete 64 der magnetischen Halterung 63 drehbar antreibbar sind. In die magnetische, drehbar angetriebene Halterung 63 kann dann ferner der Rührer 11 angeordnet werden, der sodann durch die magnetische Halterung 63 antreibbar ist (vgl. Figur 2). Mittels dem Motor 65 kann jedoch bspw. auch das Probenaufnahmeteil 8 und/oder der Behältereinsatz 9 und/oder der Rührer 11 (alle drei bspw. über ein Antreiben der mechanischen Aufnahme 61) und/oder die mechanische Aufnahme 61 und/oder die Magnete 64 der magnetischen Halterung 63 (und über diese beiden folglich auch die daran (lösbar) angeordneten Teile) und/oder unterhalb der Probenaufnahme, des Probenaufnahmeteils 8 oder des Behältereinsatzes 9 angeordnete Magnete drehbar angetrieben werden. In letztgenanntem Fall sind vorzugsweise in wenigstens einem, mehreren oder allen Probenbehältern 81 des Probenaufnahmeteils 8 (Probenkassettenhalter) bzw. in der Reaktionskammer 2 selbst Magnetrührstäbe (nicht gezeigt) angeordnet, die mittels der drehbar angetriebenen Magnete angetrieben werden und somit die Probe(n) durchrühren bzw. durchmischen können.

Gemäß der Ausführungsform sind das Unterteil 5 und das Deckelteil 6 relativ zueinander automatisiert zwischen einer offenen Zugriffsposition und einer geschlossenen (Mikrowellen)Behandlungsposition verfahrbar, wobei ein Probenaufnahmeteil 8 und/oder ein Behältereinsatz 9 mit dem Deckelteil 6 verbunden ist. Im Betriebszustand wird das Deckelteil 6 somit vorzugsweise automatisch, d.h. durch eine Steuereinheit und einem Motor angesteuert abgesenkt, wobei sich besonders vorzugsweise gleichzeitig mit dem Deckelteil 6 eine transparente Schutzhaube (nicht gezeigt) absenkt.

Gemäß den Figuren 1 und 2 werden die Proben P durch Einwirkung von Mikrowellen beheizt. Dabei ist die Reaktionskammer 2 zumindest teilweise mikrowellendurchlässig, der Druckbehälter 1 ist vorzugsweise mikrowellenundurchlässig. Der mikrowellenundurchlässige Druckbehälter 1 ist über eine mikrowellendurchlässige Koppelöffnung K an einen Mikrowellengenerator M anschließbar. Dazu ist beispielsweise zur Einkopplung der Mikrowellen im Boden des Druckbehälters 1 die Koppelöffnung K vorgesehen, in der bzw. unter der ein mit einem Magnetron M1 in Verbindung stehender Hohlleiter M2 (ggf. mit einem zugehörigen Abstrahlelement, wie einer Antenne) angeordnet sind. Die Mikrowelleneintragung erfolgt folglich vorzugsweise durch den Bodenteil des Druckbehälters 1 in einem rohrförmigen Metallreaktor. Durch die Koppelöffnung K wird folglich ein Mikrowellen-durchlässiger Bereich 80 des Druckbehälters 1 bzw. der Druckbehälterwandung (also in diesem Teil der Druckbehälterwandung) gebildet, über den die Mikrowellen in die Reaktionskammer 2 eingekoppelt werden.

Der Druckbehälter 1 kann ferner einen Fluid-Einlass FE sowie ein Fluid-Auslass FA in der Reaktionskammer 2 aufweisen, wobei Einlass FE und Auslass FA vorzugsweise in dem Deckel 6 angeordnet sind. Dabei können Einlass FE und Auslass FA eine sogenannte Gasspülvorrichtung (nicht gezeigt) zum Ausspülen eines in der Reaktionskammer 2 befindlichen Gases bilden. In einer anderen, optionalen oder zusätzlichen Ausgestaltungsform dient der Einlass FE zum Erzeugen eines Innendrucks in der Reaktionskammer 2. Durch einen Vorladedruck mit Gas kann bspw. der Behältereinsatz 9 zu einer optimalen Kühlung mittels der Kühlanordnung 4 bereits zu Beginn der Druckreaktion an die Behälterwand des Druckbehälters 1 gedrückt werden. Der Auslass FA hingegen dient zum Abblasen eines einen bestimmten Schwellenwert übersteigenden Innendrucks in der Reaktionskammer 2 sowie generell zum Druckabbau. Dazu ist vorzugsweise in dem Ablass FA ein Ventil vorgesehen, welches bei entsprechendem Überdruck öffnet, um eine Beschädigung der Vorrichtung zu verhindern. Vorzugsweise sind der Einlass FE und der Auslass FA mit Leitungen zum Zuführen bzw. Abführen eines Gases bzw. zum Erzeugen eines Innendrucks im Druckbehälter 1 verbunden. Vorzugsweise hat die Leitung, welche mit dem Auslass FA verbunden ist, einen größeren Durchmesser, als die Leitung, welche mit dem Einlass FE verbunden ist, da die Leitung des Auslasses FA dem hohen Innendruck und den hohen Temperaturen im Falle eines Abblasens standhalten muss. Sind der vorbeschriebenen Einlass FE und Auslass FA zum Abblasen vorgesehen, kann entweder die vorbeschriebene Dichtung derart vorgesehen sein, dass bei einem Abblasen durch Abheben des Deckels 6 entgegen der Vorspannung die Dichtung einen Spalt zum Abblasen zwischen Deckel 6 und Unterteil 5 bzw. Isolationsauskleidung 3, 30 freigibt. Alternativ kann die Dichtung auch derart vorgesehen sein, dass sie bei Abheben des Deckels 6 zerbirst und somit der Innendruck im Druckbehälter 1 schlagartig abfallen kann, beispielsweise, wenn eine Überdrucksicherung mittels des in der Leitung des Auslassens FA vorgesehenen Ventils nicht mehr sicher ermöglicht werden kann. In diesem Fall ist vorzugsweise eine Absaugvorrichtung vorgesehen, um eventuell freiwerdende Gase sicher abzusaugen.

Wie in den Figuren 1 und 2 gezeigt, weist das Gerät ferner einen Temperaturfühler bzw. eine Referenz-Temperatur-Sonde 12 auf. Diese(r) ist bspw. aus Tantal. Der Temperaturfühler ist vorzugsweise derart an dem Deckelteil 6 angeordnet bzw. angebracht, dass er in den Probenraum (Reaktionskammer, Probenbehälter, Druckraum) hineinragt, wenn dieser geschlossen ist. Es sind jedoch auch andere, dem Fachmann bekannte Ausgestaltungsformen zur Messung der Temperatur in dem Probenraum möglich.

Wie den Figuren 1 und 2 weiter zu entnehmen ist, weist der Druckbehälter 1 erfindungsgemäß eine Vorrichtung zur Temperaturmessung von in einem Druckbehälter aufgenommenen, zu beheizenden Proben P auf. Dazu weist der Druckbehälter 1 ein hohles Lichtleitrohr 70 auf, welches sich von dem Mikrowellen-durchlässigen Bereich 80 zu einem außerhalb des Druckraumes angeordneten Infrarotsensor 90 erstreckt. Das Lichtleitrohr 70 ist beispielsweise ein Rohr, vorzugsweise Metallrohr, welches in dem Mikrowellen-durchlässigen Bereich 80 vorgesehen ist, oder eine in dem Mikrowellen-durchlässigen Bereich 80 eingebrachte Bohrung, wobei die Innenwandung letzterer mit einer reflektierenden Schicht oder dergleichen beschichtet sein kann.

Über dieses Lichtleitrohr 70 wird die von den beheizten Proben P in der Reaktionskammer 2 emittierte Infrarotstrahlung während einer Druckreaktion zu dem Infrarotsensor 90 geleitet. Die Intensität der Infrarotstrahlung ist dabei ein Maß für die Probentemperatur. Das Lichtleitrohr 70 ist vorzugsweise mit Gas, wie beispielsweise Luft, zum Leiten der Infrarotstrahlung ausgefüllt. Besonders vorzugsweise ist das Lichtleitrohr 70 mit Infrarot-durchlässigen Lichtleitfasern zum Leiten der Infrarotstrahlung ausgefüllt. Die Lichtleitfasern sind dann vorzugsweise in Richtung einer Längserstreckung des Lichtleitrohres 70 orientiert; mit anderen Worten erstrecken sich die Lichtleitfasern zwischen dem Mikrowellen-durchlässigen Bereich 80 und dem außerhalb des Druckraumes angeordneten Infrarotsensor 90. Auf diese Weise kann die Infrarot-Strahlungstransmission durch interne Reflektion weiter verbessert und somit die Messgenauigkeit erhöht werden. Für die Lichtleitfasern wird hierzu vorzugsweise Fasermaterial mit hoher Infrarot-Transparenz verwendet.

Der Infrarotsensor 90 befindet sich an einem bzgl. der Reaktionskammer 2 gegenüberliegenden Ende des Lichtleitrohres, vorzugsweise außerhalb des Mikrowellen-durchlässigen Bereichs 80. Vorzugsweise hat der Infrarotsensor 90 einen Messbereich, also eine Durchlässigkeit für Infrarotstrahlung, von 1-8pm.

In dem Mikrowellen-durchlässigen Bereich 80 zwischen Reaktionskammer 2 und Lichtleitrohr 70 ist ferner ein infrarotdurchlässiges Druckaufnahmeteil 71 vorgesehen, um das Lichtleitrohr 70 im Mikrowellen-durchlässigen Bereich 80 abzustützen. Hierzu ist das Druckaufnahmeteil 71 vorzugsweise von einem Teil 80a des Mikrowellen-durchlässigen Bereichs 80 umhüllt. Vorzugsweise liegt das Druckaufnahmeteil 71 mit einem seiner Enden an der Reaktionskammer 2 bzw. dem Behältereinsatz 9 an. Besonders vorzugsweise liegt das Druckaufnahmeteil 71 ferner mit seinem bzgl. des vorgenannten Endes gegenüberliegenden Ende an dem Lichtleitrohr 70 an. Das Lichtleitrohr 70 erstreckt sich dann folglich aus dem Mikrowellen-durchlässigen Bereich 80 heraus und von dem vorgenannten gegenüberliegenden Ende des Druckaufnahmeteils 71 von dem Druckaufnahmeteil 71 weg und zu dem Infrarotsensor 90 hin.

Das Druckaufnahmeteil 71 ist aus Aluminiumoxid, Saphir, Kalziumfluorid oder Quarz hergestellt. In weiteren Beispielen, die nicht Teil der Erfindung sind, kann es aus Keramik oder anderen Materialien hergestellt werden.

Besonders vorzugsweise sind die Materialien des Druckaufnahmeteils 71 zudem temperaturbeständig, wenigstens innerhalb des Temperaturbereichs der Probe P während der Druckreaktion. Ferner sind sie besonders hart (kratzfest) und beständig gegen die verwendeten Chemikalien. Das Druckaufnahmeteil 71 ist vorzugsweise zylindrisch oder quader- bzw. würfelförmig oder auch andersförmig ausgebildet.

Die Erfindung beschreibt somit eine Temperatur Messung über einen Lichtleiter (Lichtleitrohr) 70 und einen Druckadapter (Druckaufnahmeteil) 71. Der Infrarotsensor 90 erfasst dabei die von den erhitzten Proben P emittierte und durch die Reaktionskammerwand, das infrarotdurchlässige Druckaufnahmeteil 71 und über das hohle Lichtleitrohr 70 (vorzugsweise ausgefüllt mit Lichtleitfasern) hindurch geleitete Infrarotstrahlung. Diese kann dann bspw. über einen nicht dargestellten elektronischen Verstärker verstärkt und einer Umsetzelektronik zugeführt werden, die die elektrischen Signale des Verstärkers in digitale Signale umsetzt und einer Ausleseeinheit (bspw. einem Computer) und/oder einer Steuereinheit zuführt. Auf Basis der gewonnenen Ergebnisse kann die Druckreaktion gesteuert werden, wobei beispielsweise das Magnetron M1 zur Mikrowelleneinkopplung, die Kühlvorrichtung 4 zur Kühlung, Rühr- oder Drehvorrichtungen oder Gaszufuhr in und/oder Gasabfuhr aus dem System gesteuert werden können.

Das Druckaufnahmeteil 71 weist in einem vorgegebenen Wellenlängenbereich ein Transmissionsfenster für Infrarotstrahlung auf. Dieses kann für ein Druckaufnahmeteil 71 aus Quarz beispielsweise zwischen 2500 Wellenzahlen pro cm bis 3500 Wellenzahlen pro cm liegen. Infrarotstrahlung außerhalb dieses Transmissionsfensters wird stark absorbiert. Das Druckaufnahmeteil 71 dient somit für den vorbestimmten Wellenlängenbereich als Filter, das unerwünschte Strahlung ausgrenzt.

Ferner kann der Druckbehälter außerhalb des Mikrowelle-durchlässigen Bereichs 80 mit einem Thermofühler 91 ausgestattet sein. Dieser dient zur Kontrolle der Erwärmung im HF-(MW)-Bereich.

Während in den obigen Ausführungsbeispielen eingehend die Erwärmung durch Mikrowellen mittels Mikrowellengenerator M beschrieben ist, so ist die Erfindung jedoch nicht auf eine derartige Heizung beschränkt. Beispielsweise können die Proben P anstelle des Mikrowellengenerators M auch durch einen thermischen Tauchsieder (nicht gezeigt) oder andere Heizvorrichtungen direkt beheizt werden. Dabei kann der Tauchsieder in dem Deckel 6 direkt vorgesehen sein, wobei der Tauchsieder derart ausgebildet ist, dass er bis in den Bereich der Probenaufnahme in die Reaktionskammer 2 hineinragt, wenigstens während einer Druckreaktion. Sind mehrere Proben P in einzelnen Probenbehältern 80 und bspw. einem Probenaufnahmeteil 8 in dem Druckbehälter 1, also der Reaktionskammer 2, angeordnet, so können auch für jeden Probenbehälter 80 bzw. jede Probe P jeweils ein Tauchsieder wie vorbeschrieben vorgesehen sein. Ebenso sind vorzugsweise die elektrischen Anschlüsse für den Tauchsieder in dem Deckel 6 vorgesehen, über die dieser mit Strom versorgt werden kann.

Bei Verwendung eines Tauchsieders liegt in der Regel kein Mikrowellen-durchlässiger Bereich vor, in dem das Druckaufnahmeteil 71 und das Lichtleitrohr angeordnet sind. In diesem Fall ist das Druckaufnahmeteil 71 in der Druckbehälterwandung genauer einem Teil der Druckbehälterwandung und vorzugsweise auch an der Reaktionskammer 2 anliegend vorgesehen, von der sich das Lichtleitrohr 70 von dem Probenraum weg zu dem Infrarotsensor 90 erstreckt.

Der einzige Unterschied der beiden vorbeschriebenen Heizmethoden liegt somit in einem wahlweisen Austausch der Heizvorrichtungen (bspw. Mikrowellengenerator M und Tauchsieder inkl. der speziell zugehörigen Merkmale wie Mikrowellen-durchlässiger Bereich, elektrischen Anschlüsse für den Tauchsieder und dergleichen). Daher wird bezüglich der Heizung mittels Tauchsieder vollumfänglich auf die Beschreibung der Ausführungsbeispiele der Figuren 1 und 2 verwiesen, die, abgesehen von der Heizung mittels Mikrowellen, in gleicher Weise auch bei anderen Heizverfahren Anwendung findet.

Gemäß einem Verfahren zum Auslösen und/oder Fördern chemischer und/oder physikalischer Druckreaktionen an Proben P, werden die Proben P in einer mittels Heizung (vorzugsweise durch Mikrowellen oder auch mittels thermischem Tauchsieder und dergleichen) beheizbaren Reaktionskammer 2 eines die Reaktionskammer 2 allseitig umgebenden Druckbehälters 1, vorzugsweise aufweisend den Unterteil 5 und den Deckelteil 6, erhitzt und dabei einem Druck ausgesetzt. Das Probenaufnahmeteil 8 und/oder der Behältereinsatz 9 können dabei in die Reaktionskammer 2 eingesetzt oder vorzugsweise mit dem Deckelteil 6 verbunden werden. Vorzugsweise werden die Proben P (bspw. über einen den Probenkassettenhalter 8 antreibenden Motor oder mittels Magnete angetriebenen Rührer 11) unter Rühren erhitzt.

Gemäß einem erfindungsgemäßen Verfahren zur Temperaturmessung von in einem Druckbehälter 1 aufgenommenen, zu beheizenden Proben P, werden die Proben P zunächst, bspw. in vorbeschriebener Weise, erhitzt. Dies geschieht folglich in einer vorzugsweise wahlweise verschließbaren Reaktionskammer 2 des Druckbehälters 1 zum Auslösen und/oder Fördern chemischer und/oder physikalischer Druckreaktionen. Das Erhitzen geschieht vorzugsweise mittels Mikrowellen, die über einen Mikrowellen-durchlässigen Bereich 80 des Druckbehälters 1 in die Reaktionskammer 2 eingekoppelt werden. Die Erhitzung mittels Tauchsieder und dergleichen, der bis in den Bereich der Probenaufnahme in die Reaktionskammer 2 bzw. den Probenbehälter 81 hineinragen, ist auch denkbar. Die von den beheizten Proben P in der Reaktionskammer 2 emittierte Infrarotstrahlung wird während der Druckreaktion über ein hohles Lichtleitrohr 70 zu einem außerhalb des Druckraumes angeordneten Infrarotsensor 90 geleitet, wobei sich das hohle Lichtleitrohr 70 von dem Mikrowellen-durchlässigen Bereich 80 zu dem Infrarotsensor 90 erstreckt bzw. von der die Reaktionskammer 2 umgebenden Druckbehälterwandung zu dem Infrarotsensor 90 erstreckt. Vorzugsweise ist das Lichtleitrohr 70 mit Gas oder besonders vorzugsweise mit Infrarot-durchlässigen Lichtleitfasern ausgefüllt, über das bzw. die die Infrarotstrahlung geleitet wird. Das Lichtleitrohr 70 stützt sich dabei im Mikrowellen-durchlässigen Bereich 80 über ein in dem Mikrowellen-durchlässigen Bereich 80 zwischen Reaktionskammer 2 und Lichtleitrohr 70 vorgesehenes und vorzugsweise an der Reaktionskammer 2 anliegendes infrarotdurchlässiges Druckaufnahmeteil 71 ab. Im Falle einer anderen Heizung, wie beispielsweise einem Tauchsieder, stützt sich das Lichtleitrohr 70 in der Druckbehälterwandung über ein in einem Teil der Druckbehälterwandung zwischen Reaktionskammer 2 und Lichtleitrohr 70 vorgesehenes und vorzugsweise an der Reaktionskammer 2 anliegendes infrarotdurchlässiges Druckaufnahmeteil 71 ab.

In einer bevorzugten Ausführungsform wird der Druckbehälter 1, der vorzugsweise eine die Reaktionskammer 2 umschließende Isolationsauskleidung 3 aufweist, durch die mittels Mikrowellenheizung oder thermischem Tauchsieder erhitzten Proben P erhitzt und gleichzeitig durch eine die Reaktionskammer 2 umgebende Kühlanordnung 4 gekühlt.

Die Verfahrensschritte aller zuvor beschriebenen Verfahren sind untereinander beliebig durchführbar.

Es sei darauf hingewiesen, dass die Erfindung nicht auf die in den vorgenannten Ausführungsbeispielen dargestellten Ausgestaltungen beschränkt ist, solange sie vom Gegenstand der Ansprüche umfasst sind. Insbesondere ist der Druckbehälter nicht auf die vorgenannte Topfform beschränkt. Ebenso sind andere Möglichkeiten der Beheizung der Probe denkbar. Auch ist die Kühlanordnung nicht auf eine Kühlung durch Umlaufkühler beschränkt, solange die geforderte Kühlung erzielt wird. Zudem ist die Erfindung nicht auf ein spezielles Material der Innenauskleidung beschränkt, so lange dieses die gewünschte Isolationswirkung erzielt. Alle Merkmale der vorgenannten Ausführungsbeispiele können in jeder beliebigen Weise kombiniert werden bzw. zusammen auftreten.

## Patentansprüche

1. Druckbehälter zur Aufnahme von zu beheizenden Proben, wobei der Druckbehälter eine verschließbare Reaktionskammer (2) als Druckraum zum Auslösen und/oder Fördern chemischer und/oder physikalischer Druckreaktionen aufweist, und wobei der Druckbehälter eine die Reaktionskammer umschließende Druckbehälterwandung aufweist,
**dadurch gekennzeichnet, dass**
sich ein hohles Lichtleitrohr (70) von der Druckbehälterwandung zu einem außerhalb des Druckraumes angeordneten Infrarotsensor (90) erstreckt, über das die von den beheizten Proben in der Reaktionskammer emittierte Infrarotstrahlung während einer Druckreaktion zum Infrarotsensor geleitet wird, und in einem Teil der Druckbehälterwandung zwischen Reaktionskammer und Lichtleitrohr und vorzugsweise an der Reaktionskammer anliegend ein infrarotdurchlässiges Druckaufnahmeteil (71) vorgesehen ist, um das Lichtleitrohr in dem Teil der Druckbehälterwandung abzustützen,
wobei das Druckaufnahmeteil aus Aluminiumoxid, Saphir, Kalziumfluorid oder Quarz hergestellt ist.

2. Druckbehälter nach Anspruch 1, wobei der Druckbehälter einen Mikrowellen-durchlässigen Bereich (80) aufweist, über den Mikrowellen in die Reaktionskammer eingekoppelt werden können, wobei sich das hohle Lichtleitrohr von dem Mikrowellen-durchlässigen Bereich zu dem außerhalb des Druckraumes angeordneten Infrarotsensor erstreckt, und wobei in dem Mikrowellen-durchlässigen Bereich zwischen Reaktionskammer und Lichtleitrohr und vorzugsweise an der Reaktionskammer anliegend das infrarotdurchlässige Druckaufnahmeteil vorgesehen ist, um das Lichtleitrohr im Mikrowellen-durchlässigen Bereich abzustützen.

3. Druckbehälter nach Anspruch 1, wobei die Proben mittels Mikrowellen oder thermischem Tauchsieder erhitzt werden.

4. Druckbehälter nach Anspruch 1 oder 2, wobei das Lichtleitrohr mit Gas oder Infrarotdurchlässigen Lichtleitfasern zum Leiten der Infrarotstrahlung ausgefüllt ist, wobei die Lichtleitfasern vorzugsweise in Richtung einer Längserstreckung des Lichtleitrohres orientiert sind.

5. Druckbehälter nach Anspruch 1 oder 2, wobei das Lichtleitrohr außerhalb des Druckraumes, vorzugsweise außerhalb des Mikrowelle-durchlässigen Bereichs bzw. der Druckbehälterwandung, mit einem Thermofühler zur Kontrolle der Erwärmung im HF-(MW)-Bereich ausgestattet ist.

6. Druckbehälter nach Anspruch 1 oder 2, wobei der Infrarotsensor einen Messbereich von 1-8 µm hat.

7. Druckbehälter nach Anspruch 1 oder 2, wobei das Druckaufnahmeteil in einem vorgegebenen Wellenlängenbereich, beispielsweise von 2500 Wellenzahlen pro cm bis 3500 Wellenzahlen pro cm, ein Transmissionsfenster für Infrarotstrahlung aufweist, wobei Infrarotstrahlung außerhalb dieses Transmissionsfensters stark absorbiert wird.

8. Druckbehälter nach Anspruch 1 oder 2, wobei der Druckbehälter einen Unterteil und einen Deckelteil aufweist, die miteinander verschließbar sind und im geschlossenen Zustand allseitig die Reaktionskammer umgeben,
wobei das Deckelteil vorzugsweise eine mechanische Aufnahme oder magnetische Halterung zur Aufnahme eines Probenaufnahmeteils und/oder eines Behältereinsatz und/oder eines Rührers aufweist, und
wobei der Druckbehälter ferner vorzugsweise einen Motor aufweist, mittels dem das Probenaufnahmeteil und/oder der Behältereinsatz und/oder der Rührer und/oder die Magnete der magnetischen Halterung und/oder unterhalb der Probenaufnahme oder des Behältereinsatz angeordnete Magnete drehbar antreibbar sind.

9. Druckbehälter nach Anspruch 1 oder 2, wobei der Druckbehälter eine die Reaktionskammer umschließende Isolationsauskleidung aufweist, die vorzugsweise aus Kunststoff, PTFE oder Keramik besteht.

10. Druckbehälter nach Anspruch 1 oder 2, wobei der Druckbehälter eine die Reaktionskammer umgebende Kühlanordnung derart aufweist, dass der Druckbehälter gleichzeitig beheizbar und kühlbar ist, wobei die Kühlanordnung vorzugsweise eine Durchflusskühlung ist, die wenigstens einen Einlass und einen Auslass für ein Kühlmedium aufweist.

11. Verfahren zur Temperaturmessung von in einem Druckbehälter aufgenommenen, zu beheizenden Proben, aufweisend die folgenden Schritte:
- Erhitzen der Proben in einer verschließbaren Reaktionskammer des Druckbehälters zum Auslösen und/oder Fördern chemischer und/oder physikalischer Druckreaktionen, wobei das Erhitzen mittels Mikrowellen geschieht, die über einen Mikrowellen-durchlässigen Bereich des Druckbehälters in die Reaktionskammer eingekoppelt werden, und
- Leiten der von den beheizten Proben in der Reaktionskammer emittierten Infrarotstrahlung während einer Druckreaktion über ein hohles Lichtleitrohr zu einem außerhalb des Druckraumes angeordneten Infrarotsensor, wobei sich das hohle Lichtleitrohr von dem Mikrowellen-durchlässigen Bereich zu dem Infrarotsensor erstreckt, wobei sich das Lichtleitrohr im Mikrowellen-durchlässigen Bereich über ein in dem Mikrowellen-durchlässigen Bereich zwischen Reaktionskammer und Lichtleitrohr vorgesehenes und vorzugsweise an der Reaktionskammer anliegendes infrarotdurchlässiges Druckaufnahmeteil abstützt, wobei das Druckaufnahmeteil aus Aluminiumoxid, Saphir, Kalziumfluorid oder Quarz hergestellt ist.

12. Verfahren zur Temperaturmessung von in einem Druckbehälter aufgenommenen, zu beheizenden Proben, aufweisend die folgenden Schritte:
- Erhitzen der Proben in einer verschließbaren Reaktionskammer des Druckbehälters zum Auslösen und/oder Fördern chemischer und/oder physikalischer Druckreaktionen, wobei das Erhitzen mittels eines thermischen Tauchsieders geschieht, der bis in den Bereich der Probenaufnahme in die Reaktionskammer hineinragt, und
- Leiten der von den beheizten Proben in der Reaktionskammer emittierten Infrarotstrahlung während einer Druckreaktion über ein hohles Lichtleitrohr zu einem außerhalb des Druckraumes angeordneten Infrarotsensor, wobei sich das hohle Lichtleitrohr von der die Reaktionskammer umgebenden Druckbehälterwandung zu dem Infrarotsensor erstreckt,
wobei sich das Lichtleitrohr in der Druckbehälterwandung über ein in einem Teil der Druckbehälterwandung zwischen Reaktionskammer und Lichtleitrohr vorgesehenes und vorzugsweise an der Reaktionskammer anliegendes infrarotdurchlässiges Druckaufnahmeteil abstützt,
wobei das Druckaufnahmeteil aus Aluminiumoxid, Saphir, Kalziumfluorid oder Quarz hergestellt ist.

13. Verfahren nach Anspruch 11 oder 12, wobei der Druckbehälter, der eine die Reaktionskammer umschließende Isolationsauskleidung aufweist, durch die mittels Mikrowellenheizung oder thermischen Tauchsieder erhitzten Proben erhitzt und gleichzeitig durch eine die Reaktionskammer umgebende Kühlanordnung gekühlt wird.

14. Verfahren nach einem der Ansprüche 11 oder 12, wobei das Lichtleitrohr mit Gas oder Infrarot-durchlässigen Lichtleitfasern ausgefüllt ist, über das bzw. die die Infrarotstrahlung geleitet wird.

## Claims

1. Pressure vessel for receiving samples to be heated, wherein the pressure vessel comprises a sealable reaction chamber (2) as a pressure chamber for initiating and/or promoting chemical and/or physical pressure reactions, and wherein the pressure vessel comprises a pressure vessel wall enclosing the reaction chamber,
**characterized in that**
a hollow light guide tube (70) extends from the pressure vessel wall to an infrared sensor (90) arranged outside the pressure chamber, via which tube the infrared radiation emitted by the heated samples in the reaction chamber is guided to the infrared sensor during a pressure reaction, and an infrared-transmissive pressure receiving member (71) is provided in a part of the pressure vessel wall between the reaction chamber and the light guide tube and preferably abutting the reaction chamber to support the light guide tube in the part of the pressure vessel wall,
wherein the pressure receiving member is made of alumina, sapphire, calcium fluoride or quartz.

2. Pressure vessel according to claim 1, wherein the pressure vessel comprises a microwave-transmissive region (80) through which microwaves can be coupled into the reaction chamber, wherein the hollow light guide tube extends from the microwave-transmissive region to the infrared sensor arranged outside the pressure chamber, and wherein the infrared-transmissive pressure receiving member is provided in the microwave-transmissive region between the reaction chamber and the light guide tube and preferably abutting the reaction chamber to support the light guide tube in the microwave-transmissive region.

3. Pressure vessel according to claim 1, wherein the samples are heated by microwaves or a thermal immersion heater.

4. Pressure vessel according to claim 1 or 2, wherein the light guide tube is filled with gas or infrared-transmissive optical fibers for guiding the infrared radiation, wherein the optical fibers are preferably oriented in the direction of a longitudinal extension of the light guide tube.

5. Pressure vessel according to claim 1 or 2, wherein the light guide tube outside the pressure chamber, preferably outside the microwave-transmissive region or the pressure vessel wall, is equipped with a thermal sensor for controlling the heating in the HF (MW) region.

6. Pressure vessel according to claim 1 or 2, wherein the infrared sensor has a measuring range of 1 - 8 µm.

7. Pressure vessel according to claim 1 or 2, wherein the pressure receiving member has a transmission window for infrared radiation in a predetermined wavelength range, for example from 2500 wavenumbers per cm to 3500 wavenumbers per cm, wherein infrared radiation outside this transmission window is strongly absorbed.

8. Pressure vessel according to claim 1 or 2, wherein the pressure vessel comprises a lower part and a lid part which can be sealed with one other and, in the closed state, surround the reaction chamber on all sides,
wherein the lid part preferably comprises a mechanical receptacle or a magnetic holder for receiving a sample receiving part and/or a vessel insert and/or a stirrer, and
wherein the pressure vessel further preferably comprises a motor by means of which the sample receiving part and/or the vessel insert and/or the stirrer and/or the magnets of the magnetic holder and/or magnets arranged below the sample receiving part or the vessel insert can be rotatably driven.

9. Pressure vessel according to claim 1 or 2, wherein the pressure vessel comprises an insulation lining surrounding the reaction chamber, which preferably consists of plastic, PTFE or ceramics.

10. Pressure vessel according to claim 1 or 2, wherein the pressure vessel comprises a cooling arrangement surrounding the reaction chamber such that the pressure vessel is simultaneously heatable and coolable, wherein the cooling arrangement is preferably a flow-through cooling arrangement comprising at least one inlet and one outlet for a cooling medium.

11. Method for measuring the temperature of samples to be heated which are received in a pressure vessel, comprising the following steps:
- heating the samples in a sealable reaction chamber of the pressure vessel to initiate and/or promote chemical and/or physical pressure reactions, wherein the heating is performed by means of microwaves coupled into the reaction chamber via a microwave-transmissive region of the pressure vessel, and
- guiding the infrared radiation emitted by the heated samples in the reaction chamber during a pressure reaction via a hollow light guide tube to an infrared sensor arranged outside the pressure chamber, wherein the hollow light guide tube extends from the microwave-transmissive region to the infrared sensor, wherein the light guide tube is supported in the microwave-transmissive region via an infrared-transmissive pressure receiving member provided in the microwave-transmissive region between the reaction chamber and the light guide tube and preferably abutting the reaction chamber, wherein the pressure receiving member is made of alumina, sapphire, calcium fluoride or quartz.

12. Method for measuring the temperature of samples to be heated which are received in a pressure vessel, comprising the following steps:
- heating the samples in a sealable reaction chamber of the pressure vessel for initiating and/or promoting chemical and/or physical pressure reactions, wherein the heating is effected by means of a thermal immersion heater which projects into the reaction chamber as far as the region of the sample receptacle, and
- conducting the infrared radiation emitted from the heated samples in the reaction chamber during a pressure reaction via a hollow light guide tube to an infrared sensor arranged outside the pressure chamber, wherein the hollow light guide tube extends from the pressure vessel wall surrounding the reaction chamber to the infrared sensor,
wherein the light guide tube is supported in the pressure vessel wall via an infrared-transmissive pressure receiving member provided in a part of the pressure vessel wall between the reaction chamber and the light guide tube and preferably abutting the reaction chamber,
wherein the pressure receiving member is made of alumina, sapphire, calcium fluoride or quartz.

13. Method according to claim 11 or 12, wherein the pressure vessel, which comprises an insulating liner surrounding the reaction chamber, is heated by the samples heated by microwave heating or thermal immersion heater and simultaneously cooled by a cooling arrangement surrounding the reaction chamber.

14. Method according to any one of claims 11 or 12, wherein the light guide tube is filled with gas or infrared-transmissive optical fibers via which the infrared radiation is guided.

## Revendications

1. Récipient sous pression pour la réception d'échantillons à chauffer, dans lequel le récipient sous pression présente une chambre de réaction (2) pouvant être fermée en tant que chambre de pression pour le déclenchement et/ou la stimulation de réactions de pression chimiques et/ou physiques, et dans lequel le récipient sous pression présente une paroi de récipient sous pression entourant la chambre de réaction,
**caractérisé en ce que**
un tube à fibres optiques (70) creux s'étend à partir de la paroi de récipient sous pression vers un capteur infrarouge (90) disposé à l'extérieur de la chambre de pression, par l'intermédiaire duquel le rayonnement infrarouge émis par les échantillons chauffés dans la chambre de réaction pendant une réaction sous pression est guidé vers le capteur infrarouge, et une partie de réception de pression (71) perméable aux infrarouges est prévue dans une partie de la paroi de récipient sous pression entre la chambre de réaction et le tube à fibres optiques et de préférence de manière à s'appliquer sur la chambre de réaction, afin de soutenir le tube à fibres optiques dans la partie de la paroi de récipient sous pression,
dans lequel la partie de réception de pression est fabriquée à partir d'oxyde d'aluminium, de saphir, de fluorure de calcium ou de quartz.

2. Récipient sous pression selon la revendication 1, dans lequel le récipient sous pression présente une zone perméable aux micro-ondes (80), par l'intermédiaire de laquelle des micro-ondes peuvent être injectées dans la chambre de réaction, dans lequel le tube à fibres optiques creux s'étend à partir de la zone perméable aux micro-ondes vers le capteur infrarouge disposé à l'extérieur de la chambre de pression, et dans lequel la partie de réception de pression perméable aux infrarouges est prévue dans la zone perméable aux micro-ondes entre la chambre de réaction et le tube à fibres optiques et de préférence de manière à s'appliquer sur la chambre de réaction, afin de soutenir le tube à fibres optiques dans la zone perméable aux micro-ondes.

3. Récipient sous pression selon la revendication 1, dans lequel les échantillons sont chauffés au moyen de micro-ondes ou d'un thermoplongeur thermique.

4. Récipient sous pression selon la revendication 1 ou 2, dans lequel le tube à fibres optiques est rempli de gaz ou de fibres optiques perméables aux infrarouges pour guider le rayonnement infrarouge, dans lequel les fibres optiques sont orientées de préférence en direction d'une étendue longitudinale du tube à fibres optiques.

5. Récipient sous pression selon la revendication 1 ou 2, dans lequel le tube à fibres optiques à l'extérieur de la chambre de pression, de préférence à l'extérieur de la zone perméable aux micro-ondes ou de la paroi de récipient sous pression, est équipé d'une thermosonde pour le contrôle du réchauffement dans la plage HF (MW).

6. Récipient sous pression selon la revendication 1 ou 2, dans lequel le capteur infrarouge présente une plage de mesure de 1- 8 µm.

7. Récipient sous pression selon la revendication 1 ou 2, dans lequel la partie de réception de pression présente dans une plage de longueurs d'onde prédéfinie, par exemple de 2500 nombres d'onde par cm à 3500 nombres d'onde par cm, une fenêtre de transmission pour le rayonnement infrarouge, dans lequel le rayonnement infrarouge à l'extérieur de cette fenêtre de transmission est fortement absorbé.

8. Récipient sous pression selon la revendication 1 ou 2, dans lequel le récipient sous pression présente une partie inférieure et une partie couvercle, qui peuvent être fermées ensemble et dans l'état fermé entourent de tous côtés la chambre de réaction,
dans lequel la partie couvercle présente de préférence un logement mécanique ou élément de retenue magnétique pour la réception d'une partie de réception d'échantillon et/ou d'un insert de récipient et/ou d'un agitateur, et
dans lequel le récipient sous pression présente en outre de préférence un moteur, au moyen duquel la partie de réception d'échantillon et/ou l'insert de récipient et/ou l'agitateur et/ou les aimants de l'élément de retenue magnétique et/ou des aimants disposés au-dessous du logement d'échantillon ou de l'insert de récipient peuvent être entraînés en rotation.

9. Récipient sous pression selon la revendication 1 ou 2, dans lequel le récipient sous pression présente un revêtement isolant entourant la chambre de réaction, qui est constitué de préférence de matière plastique, PTFE ou céramique.

10. Récipient sous pression selon la revendication 1 ou 2, dans lequel le récipient sous pression présente un ensemble de refroidissement entourant la chambre de réaction, de telle sorte que le récipient sous pression peut être chauffé et peut être refroidi simultanément, dans lequel l'ensemble de refroidissement est de préférence un refroidissement à écoulement, qui présente au moins une entrée et une sortie pour un réfrigérant.

11. Procédé pour la mesure de température d'échantillons à chauffer reçus dans un récipient sous pression, présentant les étapes suivantes :
- le chauffage des échantillons dans une chambre de réaction du récipient sous pression pouvant être fermée pour le déclenchement et/ou la stimulation de réactions de pression chimiques et/ou physiques, dans lequel le chauffage a lieu au moyen de micro-ondes, qui peuvent être injectées dans la chambre de réaction par l'intermédiaire d'une zone perméable aux micro-ondes du récipient sous pression, et
- le guidage du rayonnement infrarouge émis par les échantillons chauffés dans la chambre de réaction pendant une réaction sous pression par l'intermédiaire d'un tube à fibres optiques creux vers un capteur infrarouge disposé à l'extérieur de la chambre de pression, dans lequel le tube à fibres optiques creux s'étend à partir de la zone perméable aux micro-ondes vers le capteur infrarouge, dans lequel le tube à fibres optiques s'appuie dans la zone perméable aux micro-ondes prévue dans la zone perméable aux micro-ondes entre la chambre de réaction et le tube à fibres optiques et de préférence de manière à s'appliquer sur la chambre de réaction, dans lequel la partie de réception de pression est fabriquée à partir d'oxyde d'aluminium, de saphir, de fluorure de calcium ou de quartz.

12. Procédé pour la mesure de température d'échantillons à chauffer, reçus dans un récipient sous pression, présentant les étapes suivantes :
- le chauffage des échantillons dans une chambre de réaction pouvant être fermée du récipient sous pression pour le déclenchement et/ou la stimulation de réactions de pression chimiques et/ou physiques, dans lequel le chauffage a lieu au moyen d'un thermoplongeur thermique, qui fait saillie jusque dans la zone du logement d'échantillon dans la chambre de réaction, et
- le guidage du rayonnement infrarouge émis par les échantillons chauffés dans la chambre de réaction pendant une réaction sous pression par l'intermédiaire d'un tube à fibres optiques creux vers un capteur infrarouge disposé à l'extérieur de la chambre de pression, dans lequel le tube à fibres optiques creux s'étend à partir de la paroi de récipient sous pression entourant la chambre de réaction vers le capteur infrarouge,
dans lequel le tube à fibres optiques dans la paroi de récipient sous pression s'appuie par l'intermédiaire d'une partie de réception de pression perméable aux infrarouges prévue dans une partie de la paroi de récipient sous pression entre la chambre de réaction et le tube à fibres optiques et de préférence s'appliquant sur la chambre de réaction,
dans lequel la partie de réception de pression est fabriquée à partir d'oxyde d'aluminium, de saphir, de fluorure de calcium ou de quartz.

13. Procédé selon la revendication 11 ou 12, dans lequel le récipient sous pression, qui présente un revêtement isolant entourant la chambre de réaction, est chauffé par les échantillons chauffés au moyen d'un chauffage micro-ondes ou d'un thermoplongeur thermique et simultanément refroidi par un ensemble de refroidissement entourant la chambre de réaction.

14. Procédé selon l'une quelconque des revendications 11 ou 12, dans lequel le tube à fibres optiques est rempli de gaz ou de fibres optiques perméables aux infrarouges, par l'intermédiaire duquel ou desquelles le rayonnement infrarouge est guidé.
